# EUROPÄISCHE PATENTSCHRIFT

(11) **EP 3 556 192 B1**
(45) Veröffentlichungstag und Bekanntmachung des Hinweises auf die Patenterteilung: **29.06.2022**
(21) Anmeldenummer: 19160775.3
(22) Anmeldetag: 05.03.2019
(51) Int. Cl.: A01B 29/04, A01B 49/02, A01B 61/04, A01B 73/04

(54) **LANDWIRTSCHAFTLICHE BODENBEARBEITUNGSMASCHINE SOWIE VERFAHREN ZUR BODENBEARBEITUNG**
AGRICULTURAL SOIL WORKING MACHINE AND METHOD FOR WORKING THE SOIL
MACHINE AGRICOLE DE TRAITEMENT DU SOL AINSI QUE PROCÉDÉ DE TRAITEMENT DU SOL

(30) Priorität: 18.04.2018 DE 102018205887
(43) Veröffentlichungstag der Anmeldung: 23.10.2019
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- DE-A1- 2 450 562
- DE-A1- 3 541 543
- DE-A1- 3 707 758
- DE-U1- 9 418 722
- FR-A1- 2 619 667
- US-A1- 2013 199 807

## Beschreibung

Die vorliegende Erfindung betrifft eine landwirtschaftliche Bodenbearbeitungsmaschine mit den Merkmalen des unabhängigen Anspruchs 1 sowie ein Verfahren zur Bodenbearbeitung mit den Merkmalen des unabhängigen Verfahrensanspruchs 18.

In der Landwirtschaft werden zahlreiche verschiedene Bodenbearbeitungsmaschinen eingesetzt. Eine häufig verwendete Bauart umfasst einen angehängten Rahmen mit eigenem Fahrwerk und definierter Rahmenbreite, der mittels einer Zugmaschine über den Acker gezogen wird. Solche Bodenbearbeitungsmaschinen können mit diversen Komponenten wie beispielsweise mit Lockerungs- und/oder Schneidwerkzeugen und/oder mit Rückverfestigungswerkzeugen ausgestattet sein.

Eine derartige landwirtschaftliche Bodenbearbeitungsmaschine ist beispielsweise durch die US 8 020 629 B1 offenbart. Die hier offenbarte Maschine umfasst mehrere in Fahrtrichtung aufeinander folgende Reihen mit unterschiedlichen Werkzeugen zur Bodenbearbeitung, wobei diese mehreren Reihen jeweils quer zur Fahrtrichtung der landwirtschaftlichen Maschine angeordnet sind. Eine in Fahrtrichtung angeordnete erste Reihe ist durch Schneidscheiben ausgebildet, an welche sich in Fahrtrichtung eine zweite Reihe mit einer Messerwalze anschließt. Der zweiten Reihe sind in Fahrtrichtung eine dritte Reihe mit einer Striegeleinheit und eine vierte Reihe mit einer Packerwalze nachgeordnet. Mittels der Messerwalze sollen zunächst Pflanzenrückstände auf der Erdoberfläche zerkleinert werden. Anschließend sollen die somit entstandenen Pflanzen- und Erdrückstände mittels der Striegel bzw. mittels der Zinken möglichst gleichmäßig auf dem Ackerboden verteilt werden, so dass sie anschließend mitsamt dem oberflächlichen Erdreich mittels der Packerwalze rückverfestigt werden können.

Nachteilig bei dieser bekannten Bauart von Bodenbearbeitungsmaschinen ist jedoch, dass die Maschine nur eine Reihe mit Messerwalzen aufweist, wodurch sich zwischen diesen Freiräume ergeben, in denen keine Messerwalzen laufen, d.h. es ergeben sich Bereiche, in denen keine Bodenbearbeitung und insbesondere keine Zerkleinerung von Pflanzenrückständen mittels der Messerwalzen erfolgt. Ein weiterer Nachteil der Maschine besteht in der starren Lagerung und Aufhängung der Messerwalzen, wodurch sich die Messerwalzen nicht ohne weiteres an Bodenunebenheiten oder dergleichen anpassen können.

Eine vergleichbare landwirtschaftliche Bodenbearbeitungsmaschine ist zudem durch die EP 2 868 177 B1 offenbart. Die Maschine umfasst hintereinander mehrere quer zur Fahrtrichtung angeordnete Reihen, welche Reihen jeweils mit unterschiedlichen Werkzeugen ausgestattet sind. Eine in Fahrtrichtung angeordnete erste Reihe umfasst eine Messerwalze, an welcher sich in Fahrtrichtung eine zweite Reihe mit Striegel bzw. eine Striegelsektion anschließt. Der zweiten Reihe in Fahrtrichtung nachgeordnet folgen eine dritte Reihe mit einer Messerwalze und eine vierte Reihe mit einer Packerwalze. Die Messerwalze ist über einen Tragarm an dem Rahmen der Maschine gelagert, wobei eine solche Lagerung keine Anpassungen an Bodenunebenheiten ermöglicht.

Weiterhin ist aus der DE 37 07 758 A1 ein Bodenbearbeitungsgerät. Einem Tragarm sind zunächst Krümelwalzen mit Schneidschiene zugeordnet. Außerdem trägt der Hauptrahmen am hinteren Ende eine Packwalze. Am Querrahmen sind Tragarme angeordnet, die zusammen mit dem Querrahmen den Hauptrahmen bilden. Zwischen den Krümelwalzen sind zinkenförmige Werkzeuge vorgesehen. Diese zinkenförmigen Werkzeuge sind einem Rahmen zugeordnet und über Winkelhebel mit dem Zwischenrahmen oder dem Tragarm gelenkig verbunden. Die freien Enden der Winkelhebel sind über eine Spindel miteinander verbunden, so dass die jeweilige Winkelstellung der zinkenförmigen Werkzeuge bzw. der diesen zugeordneten Schare angepasst werden kann. Über eine Stellleiste kann die Höhe des Rahmens und damit der zinkenförmigen Werkzeuge verändert werden.

Die US 2013/199807 A1 zeigt ein Bodenbearbeitungssystem mit einer Rahmenbaugruppe, welche eine zentrale Rahmentragstruktur, Rahmenflügel sowie zentrale Längsträger umfasst. Zusätzlich kann eine Vielzahl von Bodenbearbeitungsmodulen lösbar mit der Rahmenbaugruppe gekoppelt sein. Aus der FR 2 619 667 A1 ist eine Bodenbearbeitungsvorrichtung bekannt. Diese umfasst einen Rahmen, an welchem über einen mechanischen Zylinder verstellbar an einer Welle eine horizontale Achse vorgesehen ist, an der Träger mit einer Vielzahl an Schaufeln oder Zinken drehbar befestigt sind. Weiterhin können Zinkenkrallen sowie Walzen am Rahmen angeordnet sein.

Das Dokument DE 24 50 562 A1 zeigt ein Bodenbearbeitungsgerät, an dessen Traggestell Eggenfelder sowie Bodenkrümlerfeldern angebracht sein können. Der Rahmen der Krümler weist eine Rahmenkröpfung auf, welche derart geformt ist, dass die vorderen Walzenreihen der Krümlerfelder abwechselnd lange und kurze Walzen tragen, wobei in der hinteren Walzenreihe jeweils einer vorderen kurzen Walze eine lange hintere Walze und einer vorderen langen Walze eine hintere kurze Walze zugeordnet ist.

Die DE 94 18 722 U1 beschreibt eine landwirtschaftliche Bodenbearbeitungsmaschine. An dessen Rahmen ist ein Winkelhebel schwenkbar angeordnet, an dem an einer Wippe Zinkenwalzen befestigt sind. Die Zinkenwalzen können versetzt zueinander angeordnet sein. Vor und hinter den Walzen sind Grubberwerkzeuge angeordnet. Aus der DE 35 41 543 A1 ist eine Bodenbearbeitungsmaschine mit Bodenwalzen bekannt. Der Rahmen der Bodenwalze besitzt Koppelarme, die drehgelenkig miteinander verbunden sind. Eine verstellbare Zugstange begrenzt das Aufkippen der hinteren Walzenachse und gestattet eine Drucklast-Vorgabe eine der Walzenachsen. Auf der Walzenachse sind Walzenelemente axial aufgereiht und genau auf Lücke zu den vorderen Walzenelementen angeordnet.

Der Erfindung liegt daher die Aufgabe zugrunde, eine landwirtschaftliche Bodenbearbeitungsmaschine und ein Verfahren zur Bodenbearbeitung zur Verfügung zu stellen, mittels welchen die im Stand der Technik genannten Nachteile überwunden werden, indem eine ganzflächige Bodenbearbeitung möglich ist und indem sich ein Schneidabschnitt einer landwirtschaftlichen Maschine auf einfache Art und Weise an Bodenunebenheiten oder dergleichen anpassen kann.

Diese Aufgaben werden durch eine landwirtschaftliche Maschine zur Bodenbearbeitung und/oder zur Aussaat mit den Merkmalen im Anspruch 1 sowie durch ein Verfahren zur Bodenbearbeitung mit den Merkmalen im Anspruch 18 gelöst. Weitere vorteilhafte Ausgestaltungen und Weiterbildungen der Erfindung sind in den jeweils abhängigen Ansprüchen angegeben.

Zur Lösung der genannten Aufgabe schlägt die Erfindung eine landwirtschaftliche Bodenbearbeitungsmaschine vor. Die landwirtschaftliche Bodenbearbeitungsmaschine kann sowohl als mittels einer Zugmaschine gezogene oder als an einer Zugmaschine angebaute, sog. 3-Punkt Maschine ausgeführt sein. Grundsätzlich ist es jedoch auch nicht ausgeschlossen, dass die landwirtschaftliche Bodenbearbeitungsmaschine Teil einer selbstfahrenden landwirtschaftlichen Maschine ist, was jedoch nicht die typische Ausführungsform solcher Bodenbearbeitungsmaschinen ist, so dass an dieser Stelle nicht näher auf diese alternative Ausführungsvariante eingegangen werden soll.

Die erfindungsgemäße landwirtschaftliche Bodenbearbeitungsmaschine umfasst zumindest eine Rahmenkonstruktion zum Tragen von verschiedenen Komponenten zur Bodenbearbeitung. Die Rahmenkonstruktion kann sich insbesondere aus einem Mittelrahmen und sich jeweils seitlich vom Mittelrahmen erstreckende Maschinenabschnitte zusammensetzen. Die Rahmenkonstruktion dient in erster Linie dazu, eine stabile Stütz- und Haltekonstruktion für die erforderlichen Komponenten, Werkzeuge und Eingriffselemente zur Verfügung zu stellen, mit denen der Boden in der jeweils gewünschten Weise bearbeitet werden soll. Bei den genannten Komponenten kann es sich beispielsweise um eine Vielzahl von Werkzeugen oder Eingriffselementen handeln, welche der Rahmenkonstruktion zugeordnet und welche dort insbesondere in Fahrtrichtung hintereinander angeordnet sein können, wobei die Positionierungen im vorliegenden Zusammenhang auch als Abschnitte bezeichnet werden, die an der Rahmenkonstruktion hintereinander angeordnet sind. Wenn nachfolgend von Abschnitten die Rede ist, so kann mit dieser Definition auch die Anordnung der Werkzeuge oder Eingriffselemente in Reihen gemeint sein, welche Reihen sich quer zur Fahrtrichtung der Bodenbearbeitungsmaschine erstrecken.

Die erfindungsgemäße landwirtschaftliche Bodenbearbeitungsmaschine umfasst zumindest einen Schneidabschnitt gemäß Anspruch 1.

Weiter umfasst die erfindungsgemäße landwirtschaftliche Bodenbearbeitungsmaschine zumindest einen dem zumindest einen Schneidabschnitt in Fahrtrichtung nachgeordneten Zinkenabschnitt zur Verteilung der Pflanzenrückstände und zur Einebnung der Oberfläche des Bodens; d.h. der zumindest eine Zinkenabschnitt kann zur Verteilung der Pflanzenrückstände und/oder zur Einebnung der gelockerten Oberfläche des Bodens ausgebildet sein.

Weiter umfasst die erfindungsgemäße landwirtschaftliche Bodenbearbeitungsmaschine zumindest einen dem zumindest einen Zinkenabschnitt in Fahrtrichtung nachgeordneten Rückverfestigungsabschnitt zur Rückverfestigung des durch den zumindest einen Schneidabschnitt und/oder zumindest einen Zinkenabschnitt bearbeiteten und/oder gelockerten Bodens; d.h. der Rückverfestigungsabschnitt kann zur Rückverfestigung des durch den Schneidabschnitt und/oder Zinkenabschnitt bearbeiteten und/oder gelockerten Bodens ausgebildet sein.

Der zumindest eine Schneidabschnitt umfasst zumindest zwei in Fahrtrichtung hintereinander angeordnete rotierende Messerwalzen, wobei diese Messerwalzen typischerweise um horizontale Drehachsen rotieren, die in etwa quer zur Fahrtrichtung der Bodenbearbeitungsmaschine orientiert sind. Der zumindest eine Schneidabschnitt kann zumindest zwei Reihen umfassen, welchen Reihen jeweils eine Messerwalze zugeordnet sein kann. Um diese rotierenden Messerwalzen an Bodenunebenheiten, Bodenwellen oder dergleichen anzupassen, sind die Messerwalzen an einer Schwinge montiert und bilden eine Tandemanordnung aus, welche Tandemanordnung schwenkbar an einer an der Rahmenkonstruktion gelagerten Konsole angeordnet ist. Bei der Konsole kann es sich im weitesten Sinne um eine Lagereinheit handeln, über welche die Schwinge mit den daran angeordneten Messerwalzen an der Rahmenkonstruktion beweglich und/oder höhenverstellbar gelagert sein kann.

Um eine ganzflächige Bearbeitung des zu bearbeitenden Bodens mittels des zumindest einen Schneidabschnittes, insbesondere mittels der zumindest zwei rotierenden Messerwalzen zu erreichen, ist es vorgesehen, dass die zumindest zwei in Fahrtrichtung hintereinander angeordneten Messerwalzen quer zur Fahrtrichtung versetzt zueinander angeordnet sind. Durch die versetzte Anordnung der Messerwalzen zueinander können Freiräume zwischen den zumindest zwei in Fahrtrichtung hintereinander angeordneten Messerwalzen vermieden werden, wodurch somit eine ganzflächige und damit gegenüber herkömmlichen Lösungen optimierte Bodenbearbeitung möglich ist.

Wahlweise und/oder zusätzlich kann zumindest eine weitere Messerwalze in der Mitte der Schwinge angebracht sein.

Es ist darüber hinaus vorgesehen, dass die Konsole höhenverstellbar an der Rahmenkonstruktion gelagert ist. Die Lagerung der Konsole an der Rahmenkonstruktion erfolgt durch eine Lagereinheit. Der Konsole ist zumindest ein Linearelement zugeordnet, wodurch die Höhe der Konsole gegenüber der Rahmenkonstruktion eingestellt werden kann. Das zumindest eine Linearelement kann beispielsweise als pneumatischer, oder hydraulischer Zylinder ausgebildet sein. Über die Konsole kann damit auch die Schwinge mit den zwei in Fahrtrichtung hintereinander, insbesondere aber quer zur Fahrtrichtung versetzt zueinander, angeordneten Messerwalzen gegenüber der Rahmenkonstruktion höhenverstellbar ausgebildet sein. Alternativ Z und nicht erfindungsgemäß kann als Linearelement auch eine Spindel vorgesehen sein, welche Spindel wiederum manuell betätigbar bzw. verstellbar oder auch mittels eines motorisch angetriebenen und/oder betätigten Aktors verstellbar sein kann.

Es ist weiterhin vorgesehen, dass mittels des zumindest einen Linearelements eine Vorspannkraft bzw. eine Anpresskraft auf die zumindest zwei Messerwalzen erzeugbar ist bzw. erzeugt wird, welche Vorspannkraft bzw. Anpresskraft vorteilhafterweise variabel verstellbar und/oder einstellbar sein kann. Folglich können die zumindest zwei Messerwalzen, insbesondere deren Vorspannkraft bzw. Anpresskraft, jeweils individuell für jede Feldfahrt an die aktuell vorherrschenden Umgebungs- und Feldbedingungen eingestellt werden. Es kann vorgesehen sein, dass die Vorspannkraft bzw. Anpresskraft in Abhängigkeit der Breite der zumindest zwei Messerwalzen variabel veränderbar ist.

Gemäß einem weiteren Ausführungsbeispiel der landwirtschaftlichen Bodenbearbeitungsmaschine kann vorgesehen sein, dass sich die Maschine aus einer Mehrzahl von jeweils einen Meter breiten Messerwalzensegmenten zusammensetzt, welchen Segmenten jeweils zumindest ein Linearelement zugeordnet ist, wobei die Vorspannkraft bzw. die Anpresskraft in Abhängigkeit der Breite der Messerwalzen variabel verstellt und/oder eingestellt werden kann.

Weiter kann vorgesehen sein, dass das zumindest eine Linearelement bzw. dessen Steuerung eine mechanische und/oder eine hydraulische Überlastsicherung umfasst. Beispielsweise kann die hydraulische Überlastsicherung einen hydraulischen Federspeicher umfassen. Wahlweise wären auch jegliche weitere mechanische Überlastsicherungen für das Linearelement denkbar. Auch kann vorgesehen sein, dass die Konsole als solche eine Überlastsicherung umfasst, welche hydraulisch und/oder mechanisch ausgebildet sein kann. Als mechanische Überlastsicherungen können sich beispielsweise Elastomerlager, Gummischnüre, Federelemente oder dergleichen eignen. Die Überlastsicherung kann dazu dienen, dass die Messerwalzen beim Auftreffen auf Hindernisse, Steine und/oder sonstigen Gegenständen und/oder Bodenunebenheiten nach oben schwingen und/oder nach oben ausweichen kann, so dass Beschädigungen und/oder Brüche oder dergleichen an den Messerwalzen vermieden werden können.

Weiter ist es vorgesehen, dass die Schwinge mittels elastisch verformbarer und eine Vorspannkraft erzeugender Lagerelemente an die Konsole gelagert ist. Die Lagerelemente können beispielsweise Elastomerlager oder Gummischurlager oder dergleichen umfassen. Auch kann vorgesehen sein, dass die Lagerelemente eine Vorspannkraft auf die Schwinge erzeugen, welche Vorspannkraft sich auf die zumindest zwei Messerwalzen übertragen lässt. Durch die durch die Lagerung erzeugte Vorspannkraft können die zumindest zwei Messerwalzen voreingestellt werden. Auch können die Lagerelemente Überlasten aufnehmen.

Weiter kann vorgesehen sein, dass die zumindest zwei in Fahrtrichtung hintereinander, quer zur Fahrtrichtung versetzt zueinander, angeordneten Messerwalzen, unterschiedlich ausgeführt sind. Beispielsweise können die Messerwalzen quer zur Fahrtrichtung orientierte Messer aufweisen, welche Messer geradlinig und/oder spiralförmig verlaufen. Wahlweise können die Messerwalzen einen geschlossenen Grundkörper aufweisen.

Wahlweise können die zumindest zwei in Fahrtrichtung hintereinander, insbesondere aber quer zur Fahrtrichtung versetzt zueinander, angeordneten Messerwalzen identisch ausgebildet sein.

Die Bodenbearbeitungsmaschine kann sich aus mehreren Maschinenabschnitten zusammensetzen, welche jeweils klappbar zueinander ausgebildet sein können. Jeder der Maschinenabschnitte kann zumindest einen Schneidabschnitt umfassen, welcher eine Schwinge mit zumindest zwei in Fahrtrichtung hintereinander angeordneten Messerwalzen umfasst. Zusätzlich kann jeder der Maschinenabschnitte zumindest einen Zinkenabschnitt und zumindest einen Rückverfestigungsabschnitt umfassen, wobei der zumindest eine Zinkenabschnitt dem zumindest einen Schneidabschnitt und der zumindest eine Rückverfestigungsabschnitt dem zumindest einen Zinkenabschnitt in Fahrtrichtung nachgeordnet sind. Dabei kann vorgesehen sein, dass die an zwei zueinander klappbaren Maschinenabschnitten in zumindest zwei Reihen hintereinander angeordneten Messerwalzen jeweils versetzt zueinander angeordnet sind und/oder jeweils in das Bearbeitungsfeld des benachbarten klappbaren Maschinenabschnitts hineinreichen. Aufgrund der versetzt zueinander angeordneten Messerwalzen kann eine ganzflächige Bodenbearbeitung erreicht werden.

Vorzugsweise ist die Konsole von vorne oben nach hinten unten orientiert, d.h. die Konsole wird jeweils in Fahrtrichtung gezogen. Damit ist gemeint, dass die Konsole in Fahrtrichtung in einer Weise geneigt ist, dass ein sich öffnender Ausrichtungswinkel zwischen einer Bodenoberfläche und einer Längserstreckungsrichtung der Konsole in Fahrtrichtung orientiert ist, womit eine gezogene Ausrichtung der Konsole in eindeutiger Weise definiert ist. Die gezogene Ausrichtung der Konsole ist deshalb zu bevorzugen, da eine geschobene Anordnung beim Auftreffen auf Widerstände im Boden zum Aufbäumen neigen könnte, was zu Nachteilen in der Tiefenführung und zu ungünstigen Effekten hinsichtlich des gewünschten Anpressdrucks der Eingriffswerkzeuge oder Bodenbearbeitungswerkzeuge führen könnte.

Es kann vorgesehen sein, dass der zumindest eine Zinkenabschnitt zumindest zwei hintereinander angeordnete Träger aufweist, wodurch zwei Reihen ausgebildet werden, welche zwei Reihen sich quer zur Fahrtrichtung der landwirtschaftlichen Bodenbearbeitungsmaschine erstrecken. An den Trägern können Werkzeuge, insbesondere Zinken, angeordnet sein. Vorzugsweise können die Zinken jeweils gleichmäßig zueinander beanstandet am Träger angeordnet sein. Es kann vorgesehen sein, dass die Zinken an den zumindest zwei Trägern quer zur Fahrtrichtung versetzt zueinander oder hintereinander angeordnet sind.

Es kann zudem vorgesehen sein, dass die Zinken als Striegelzinken, Grubberspitzen oder dergleichen ausgebildet sind. Insbesondere kann vorgesehen sein, dass der Winkel der Werkzeuge bzw. der Zinken des Zinkenabschnitts in Bezug auf die Bodenoberfläche des zu bearbeitenden Bodens verändert werden kann, wodurch deren Aggressivität eingestellt werden kann. Zum Einstellen der Winkel der Zinken können weitere Linearelemente vorgesehen sein, welche beispielsweise als pneumatische, hydraulische oder elektrische Zylinder ausgebildet sein können. Das Einstellen der Winkel kann automatisch oder manuell erfolgen.

Der zumindest eine Rückverfestigungsabschnitt kann zur Rückverfestigung des gelockerten Bodens zumindest eine, zwei oder mehr rotierende Packerwalzen umfassen, die typischerweise heckseitig an der Bodenbearbeitungsmaschine angeordnet sind, wobei gegebenenfalls eine schwenkbare und/oder höhenverstellbare Lagerung der Packerwalzen sinnvoll sein kann, beispielsweise im Zusammenhang mit einer Höhenverstellbarkeit des gesamten Maschinenrahmens zur Variation der Eingriffstiefe der übrigen Bodenbearbeitungskomponenten im zu bearbeitenden Boden. Die wenigstens eine heckseitig an der Maschine angeordnete Packerwalze kann beispielsweise eine Mehrzahl von zueinander beabstandeten Packerringen aufweisen. Wahlweise kann der Rückverfestigungsabschnitt auch Packerreifen oder dergleichen Packerwerkzeuge umfassen.

Wie erwähnt, kann es als weitere Option vorgesehen sein, dass der zumindest eine Zinkenabschnitt und/oder der zumindest eine Rückverfestigungsabschnitt an der Rahmenkonstruktion höhenverstellbar ausgebildet sind, wobei insbesondere die zumindest eine Packerwalze und/oder der zumindest eine Zinken höhenverstellbar an der Rahmenkonstruktion angebracht sind. Zur Höhenverstellung des zumindest einen Zinkenabschnitts und/oder des zumindest einen Rückverfestigungsabschnitts können weitere Linearelemente vorgesehen sein, welche beispielsweise als pneumatische, hydraulische oder elektrische Zylinder ausgebildet sein können.

Weiter kann vorgesehen sein, dass dem zumindest einen Schneidabschnitt in Fahrtrichtung Tiefenführungsräder vorgeordnet sind und/oder dass zwischen dem Schneidabschnitt und/oder dem Zinkenabschnitt in Fahrtrichtung Tiefenführungsräder angeordnet bzw. zugeordnet sind und/oder dass in den Schneidabschnitt und/oder den Zinkenabschnitt Tiefenführungsräder integriert sind.

Gemäß einer Weiterbildung der Erfindung können der Bodenbearbeitungsmaschine Elemente und/oder Komponenten zur Ausbringung von Saatgut, insbesondere zur Ausbringung von Mikrogranulaten, zugeordnet sein. Dementsprechend kann die Maschine zumindest einen Vorratstank umfassen, mittels welchen das Saatgut mitgeführt und bevorratet werden kann. Unterhalb des Vorratstanks kann zumindest eine Dosiervorrichtung vorgesehen sein, so dass das im Vorratsbehälter mitgeführte und bevorratete Saatgut aus dem Vorratsbehälter entnommen und direkt in einzelne Leitungen entsprechend dosiert bzw. verteilt werden kann. In den Leitungen kann jeweils ein Luftvolumenstrom herrschen, welcher durch ein Gebläse, vorzugsweise durch ein Radialgebläse erzeugt wird. Der durch das Gebläse erzeugte Luftvolumenstrom kann als Trägermedium dienen, so dass durch Zumischen und/oder Beimischen von Saatgut in den Luftvolumenstrom der einzelnen Leitung ein Saatgut-Luftvolumenstrom ausgebildet werden kann. Das Leitungssystem bzw. die einzelnen Leitungen können in bodennahe oder im Boden geführte Ausbringelemente münden, mittels welchen das Saatgut in den Boden ausgebracht werden kann. Die Ausbringelemente können vorzugsweise in Fahrtrichtung vor und/oder nach dem Rückverfestigungsabschnitt angeordnet sein. Damit kann in nur einem Arbeitsgang sowohl eine Bodenbearbeitung als auch eine Aussaat von Saatgut erfolgen.

Weiter ist es vorgesehen, dass der Bodenbearbeitungsmaschine eine Steuereinrichtung zugeordnet ist, über welche eine Ansteuerung des zumindest einen Linearelements möglich ist.

Die Erfindung umfasst weiter ein Verfahren zur Bodenbearbeitung, welches zumindest die folgenden Schritte umfasst: In einem ersten Schritt erfolgt ein Zerkleinern von Pflanzenrückständen an der Oberfläche eines zu bearbeitenden Bodens mittels zumindest eines Schneidabschnittes, welches zumindest zwei in Fahrtrichtung hintereinander angeordnete Messerwalzen umfasst. Die Messerwalzen sind mittels einer Schwinge schwenkbar an einer Konsole gelagert, welche Konsole an eine die Komponenten der Bodenbearbeitungsmaschine tragenden Rahmenkonstruktion angebracht ist.

In einem nächsten Schritt erfolgen ein Verteilen von Pflanzenrückständen und ein Einebnen der Oberfläche des Bodens mittels eines dem Schneidabschnitt in Fahrtrichtung folgenden bzw. nachgeordneten Zinkenabschnitts.

In einem weiteren Schritt erfolgt ein Rückverfestigen des gelockerten Bodens mittels eines dem Zinkenabschnitt in Fahrtrichtung folgenden bzw. nachgeordneten Rückverfestigungsabschnitts.

Es ist vorgesehen, dass die Konsole mittels eines Linearelements an der Rahmenkonstruktion höhenverstellbar gelagert ist, wobei mit dem Linearelement eine Anpresskraft auf die Messerwalze erzeugt werden kann, welche Anpresskraft variabel verstellbar ist.

Hinsichtlich aller oben erwähnten Aspekte und Ausführungsvarianten der erfindungsgemäßen Bodenbearbeitungsmaschine sei an dieser Stelle darauf hingewiesen, dass diese Aspekte und Charakteristika gleichermaßen Teil des erfindungsgemäßen Verfahrens zur Bodenbearbeitung sein und/oder Anwendung auf das erfindungsgemäße Verfahren finden können. Wenn daher an irgend einer Stelle der obigen Beschreibung von bestimmten Aspekten und Varianten der Bodenbearbeitungsmaschine die Rede ist, so sind diese Aspekte und Ausführungsvarianten gleichermaßen auf das Verfahren zur Bodenbearbeitung zu lesen und sollen auch in dieser Weise verstanden werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine perspektivische Ansicht einer Ausführungsvariante einer erfindungsgemäßen landwirtschaftlichen Bodenbearbeitungsmaschine.
Fig. 1B zeigt eine Draufsicht der in Fig. 1A dargestellten Bodenbearbeitungsmaschine.
Fig. 1C zeigt eine Seitenansicht der in den Figuren 1A und 1B dargestellten Variante der Bodenbearbeitungsmaschine.
Fig. 2A zeigt eine Perspektivansicht von Bodenbearbeitungswerkzeugen einer landwirtschaftlichen Bodenbearbeitungsmaschine gemäß Figuren 1A bis 1C, umfassend in zwei Reihen angeordneten Messerwalzen, einen zweireihigen Zinkenabschnitt und eine nachfolgende Packerwalze.
Fig. 2B zeigt eine Draufsicht der in Fig. 2A dargestellten Bodenbearbeitungswerkzeuge.
Fig. 3A zeigt eine Perspektivansicht von zwei an einer Schwinge in Fahrtrichtung hintereinander angeordneten Messerwalzen, wobei die Schwinge schwenkbar an einer Konsole gelagert ist.
Fig. 3B zeigt eine Draufsicht der in Fig. 3A dargestellten Schwinge mit zwei Messerwalzen.
Fig. 3C zeigt eine Seitenansicht der in den Figuren 3A und 3B dargestellten Schwinge mit zwei Messerwalzen.
Fig. 4A zeigt eine Ausführungsform eines Hydraulikschaltplans zur Ansteuerung von Linearelementen, wie sie zur Verstellung von Bodenbearbeitungswerkzeugen der landwirtschaftlichen Bodenbearbeitungsmaschine eingesetzt werden können.
Fig. 4B zeigt eine weitere Ausführungsform eines Hydraulikschaltplans zur Ansteuerung von Linearelementen.
Fig. 4C zeigt eine dritte Ausführungsvariante eines Hydraulikschaltplans zur Ansteuerung von Linearelementen.
Fig. 4D zeigt eine vierte Ausführungsvariante eines Hydraulikschaltplans zur Ansteuerung von Linearelementen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die landwirtschaftliche Bodenbearbeitungsmaschine ausgestaltet sein kann und stellen keine abschließende Begrenzung dar.

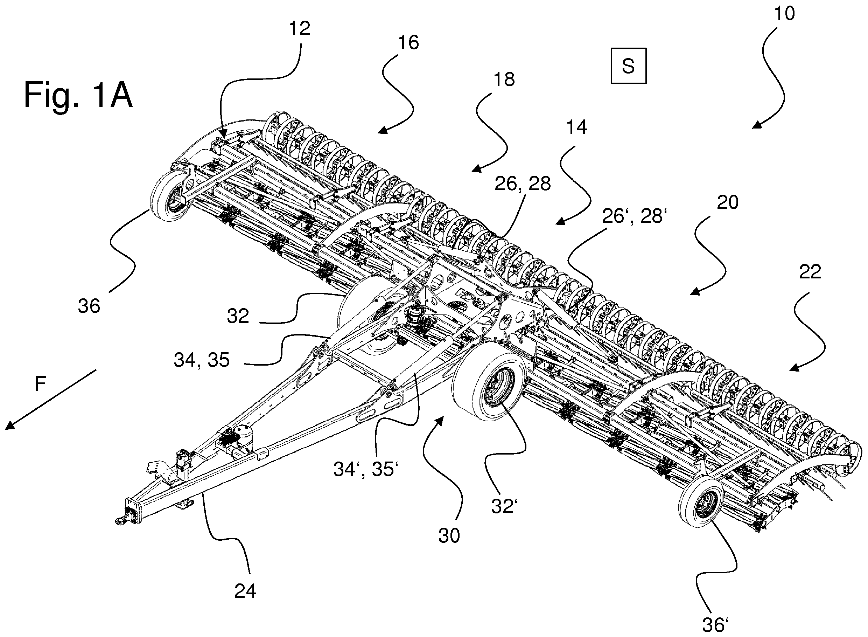

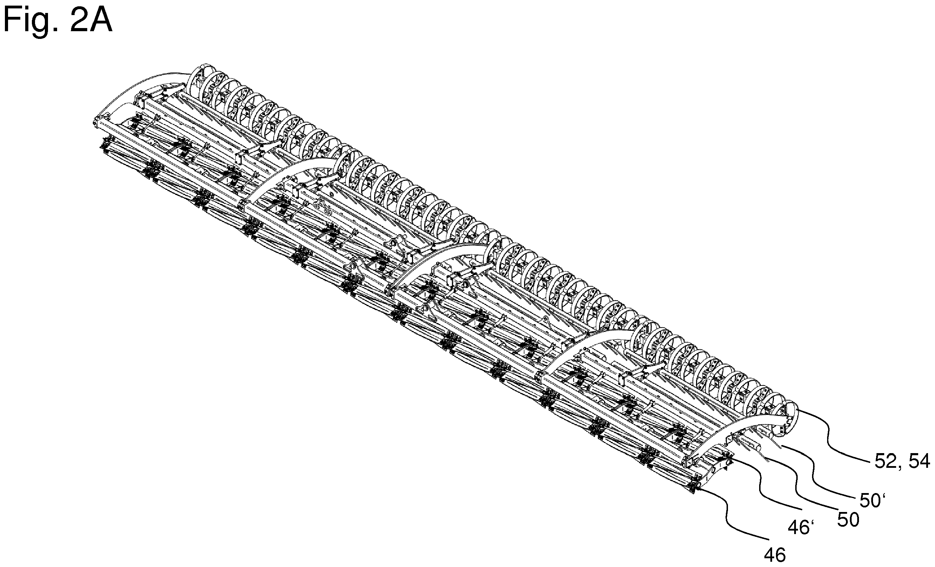

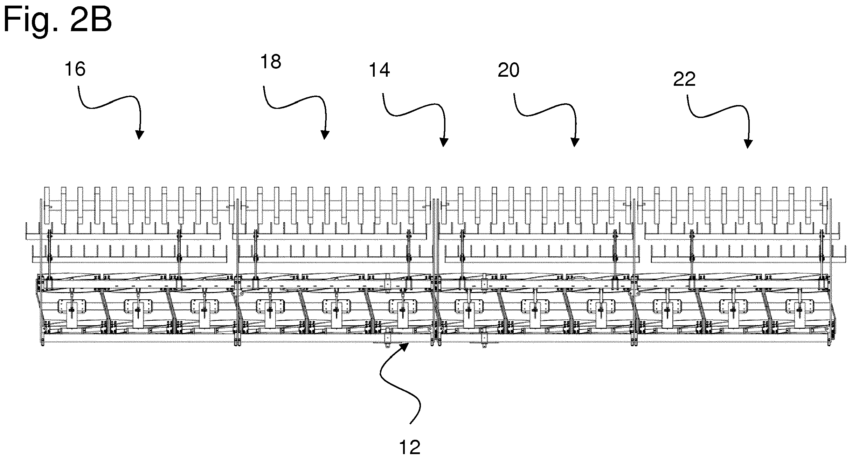

Die Figuren 1A bis 1C zeigen in verschiedenen Ansichten jeweils eine Ausführungsvariante einer erfindungsgemäßen landwirtschaftlichen Bodenbearbeitungsmaschine 10 mit einer Rahmenkonstruktion 12 zum Tragen der jeweiligen Komponenten; die Figuren 2A und 2B zeigen in verschiedenen Ansichten unterschiedliche Bodenbearbeitungswerkzeuge, wie sie bei der landwirtschaftlichen Bodenbearbeitungsmaschine 10 verbaut sein und eingesetzt werden können. Die Rahmenkonstruktion 12 umfasst einen Mittelrahmen 14 und zwei sich jeweils seitlich an den Mittelrahmen 14 erstreckende Maschinenabschnitte 16, 18, 20 und 22. Die seitlichen Maschinenabschnitte 16, 18 sowie die seitlichen Maschinenabschnitte 20, 22 sind jeweils gegenüber dem Mittelrahmen 14 um circa 90° verschwenkbar ausgebildet, so dass die Gesamtbreite der Maschine 10 bedarfsweise reduziert werden kann, was insbesondere für einen Straßentransport wünschenswert bzw. notwendig ist.

Bei den zwei sich jeweils seitlich vom Mittelrahmen 14 erstreckenden Maschinenabschnitten 16, 18, 20, 22 handelt es sich um je zwei innere Maschinenabschnitte 18, 20 sowie um je zwei äußere Maschinenabschnitte 16, 22. In den Figuren 1A bis 1C sowie in den Figuren 2A und 2B befinden sich die Maschinenabschnitte 16, 18, 20, 22 gegenüber dem Mittelrahmen 14 in einer weitgehend horizontalen Lage, um die Bodenbearbeitung im Rahmen einer Feldfahrt durchzuführen. Um bei Straßenfahrten die für eine auf öffentlichen Straßen zulässige Breite der Maschine einzuhalten, sind zum Verschwenken der Maschinenabschnitte 16, 18, 20, 22 gegenüber dem Mittelrahmen 14 Stellelemente 26, 26' vorgesehen. Die Stellelemente 26, 26' umfassen beispielsweise elektrische bzw. elektromotorisch betätigbare, pneumatisch oder hydraulisch arbeitende Zylinder 28, 28' (vgl. Figuren 1A bis 1C).

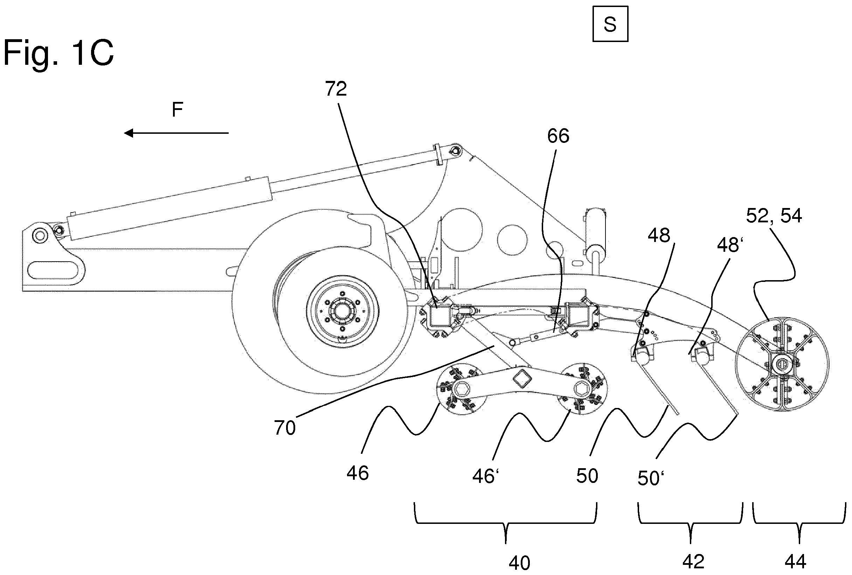

Zur Anbindung der Bodenbearbeitungsmaschine 10 an ein hier nicht dargestelltes Zugfahrzeug umfasst der Mittelrahmen 14 in Fahrtrichtung F vorderseitig eine Zugdeichsel 24. Dem Mittelrahmen 14 ist in Fahrtrichtung F vorderseitig ein Fahrwerk 30 zugeordnet, welches Räder 32, 32' umfasst. Das Fahrwerk 30 ist gegenüber dem Mittelrahmen 14 verschwenkbar ausgebildet, so dass das Fahrwerk 30 für eine Straßenfahrt abgesenkt und für eine Feldfahrt (vgl. Fig. 1C) angehoben wird. Hierzu sind weitere Stellelemente 34, 34' in Form von weiteren elektrischen, pneumatischen oder hydraulischen Zylindern 35, 35' vorgesehen. In den Figuren 2A und 2B ist die Rahmenkonstruktion 12 der landwirtschaftlichen Bodenbearbeitungsmaschine 10 ohne Fahrwerk 30 abgebildet.

An den äußeren Maschinenabschnitten 16, 22 sind in Fahrtrichtung F vorderseitig Tiefenführungsräder 36, 36' für die Einhaltung der Arbeitstiefe und zur Anpassung an das Gelände vorgesehen.

Wie es aus den Figuren 1A bis 1C sowie aus den Figuren 2A und 2B deutlich hervorgeht, ist die Bodenbearbeitungsmaschine 10 in zumindest drei Abschnitte unterteilt. So umfasst die Bodenbearbeitungsmaschine 10 in Fahrtrichtung F zunächst zumindest einen Schneidabschnitt 40, welcher zur Zerkleinerung von Pflanzenrückständen an der Oberfläche eines hier nicht dargestellten Bodens ausgebildet ist. Der Schneidabschnitt 40 umfasst zumindest zwei in Fahrtrichtung F hintereinander angeordnete Messerwalzen 46, 46', d.h. der Schneidabschnitt 40 umfasst zumindest zwei Reihen mit Messerwalzen 46, 46', welche Reihen quer zur Fahrtrichtung F der Bodenbearbeitungsmaschine 10 angeordnet sind. Die Messerwalzen 46, 46' sind an einer Schwinge 56 montiert und bilden eine Tandemanordnung aus, welche Tandemanordnung schwenkbar an einer an der Rahmenkonstruktion 12 gelagerten Konsole 58 angebracht ist.

Die Bodenbearbeitungsmaschine 10 umfasst weiter zumindest einen dem Schneidabschnitt 40 in Fahrtrichtung F nachgeordneten Zinkenabschnitt 42, welcher zur Zerkleinerung der Pflanzenrückstände und zur Einebnung der Oberfläche eines hier nicht dargestellten Bodens ausgebildet ist. Der Zinkenabschnitt 42 umfasst zumindest zwei in Fahrtrichtung F hintereinander angeordnete Träger 48, 48', d.h. der Zinkenabschnitt 42 umfasst zwei Reihen, welche Reihen quer zur Fahrtrichtung F der Bodenbearbeitungsmaschine angeordnet sind. An den Träger 48, 48' sind Zinken 50, 50' in einem gleichmäßigen Abstand zueinander angeordnet. Bei den Zinken 50, 50' kann es sich beispielsweise um Striegelzinken oder Grubberspitzen oder dergleichen handeln. Vorzugsweise sind die in Fahrtrichtung F hintereinander angeordneten Zinken 50, 50' quer in Fahrtrichtung F versetzt zueinander montiert, wodurch folglich keine Freiräume entstehen und eine ganzflächige Bearbeitung des Bodens möglich ist. Insbesondere ist auch der Winkel der Zinken 50, 50' einstellbar, wodurch deren Aggressivität verstellt werden kann. Zum Einstellen der Winkel können weitere hier nicht dargestellte Linearelemente vorgesehen sein, welche beispielsweise als pneumatische, hydraulische oder elektrische Zylinder ausgebildet sein können. Das Verstellen der Winkel kann automatisch oder manuell erfolgen.

Die Bodenbearbeitungsmaschine 10 umfasst weiter zumindest einen dem Zinkenabschnitt 42 in Fahrtrichtung F nachgeordneten Rückverfestigungsabschnitt 44, welcher zur Rückverfestigung des (hier nicht dargestellten) gelockerten Bodens ausgebildet ist. Der Rückverfestigungsabschnitts 44 umfasst eine Packerwalze 52, welche durch eine Vielzahl von zueinander beabstandeten Packerringen 54 ausgebildet ist.

Die Zinken 50, 50' und/oder die Packerwalze 52 sind höhenverstellbar zur Rahmenkonstruktion 12 angebracht. Zur Höhenverstellung der Zinken 50, 50' und/oder der Packerwalze 52 können hier nicht dargestellte weitere Linearelemente beispielsweise in Form von elektrischen, pneumatischen oder hydraulischen Zylindern oder dergleichen vorgesehen sein. Das Verstellen der Höhe kann automatisch oder manuell erfolgen.

Die Bodenbearbeitungsmaschine 10 umfasst eine Steuereinrichtung S, über welche die Stellelemente 26, 26', die weiteren Stellelemente 34, 34', die Linearelemente 66 sowie die hier nicht dargestellten weiteren Linearelemente angesteuert werden können.

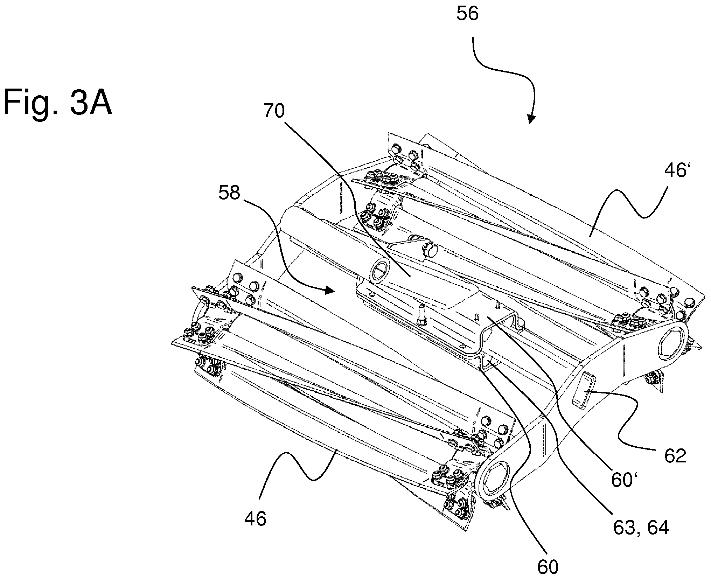

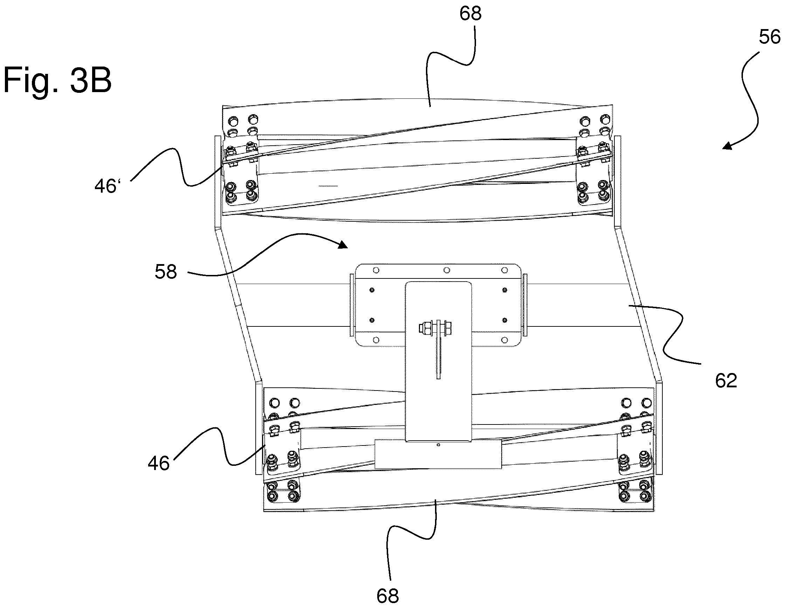

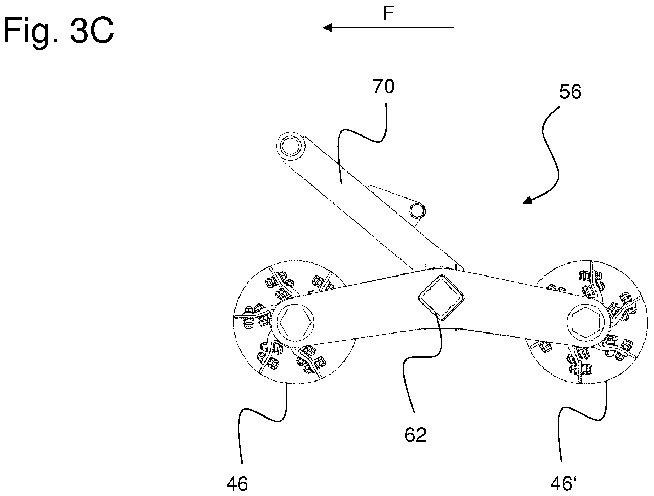

In den Figuren 3A bis 3C sind verschiedene Ansichten der Konsole 58 und Schwinge 56 mit den zumindest zwei in Fahrtrichtung F daran angeordneten Messerwalzen 46, 46' dargestellt. Die Messerwalzen 46, 46' sind jeweils in Fahrtrichtung F am vorderen und am hinteren Ende der Schwinge 56 montiert und bilden eine Tandemanordnung aus, welche Tandemanordnung schwenkbar an einer an der Rahmenkonstruktion 12 gelagerten Konsole 58 angebracht ist.

Um eine ganzflächige Bearbeitung des Bodens mittels der Messerwalzen 46, 46' zu erreichen, sind die zumindest in Fahrtrichtung F hintereinander angeordneten Messerwalzen 46, 46' quer zur Fahrtrichtung F versetzt zueinander angeordnet. Auf diese Weise werden Freiräume bzw. unbearbeitete Flächen des Bodens vermieden, so dass eine optimale und verbesserte Bodenbearbeitung gegenüber herkömmlicher Bodenbearbeitungsmaschinen erfolgt. Auch können die Messerwalzen 46, 46' derartig angeordnet sein, dass diese in das jeweilige Bearbeitungsfeld des benachbarten Maschinenabschnittes 16, 18, 20, 22 und/oder Mittelrahmens 14 hineinreichen.

Die Konsole 58 setzt sich aus zwei Gehäusehälften 60, 60' zusammen, welche einen Längsträger 62 der Schwinge 56 aufnimmt, d.h. die Konsole 58 bildet eine Lagereinheit für die Schwinge 56 aus. Die Konsole 58 als solche ist hingegen über einen Tragarm 70 an der Rahmenkonstruktion 12 gelagert, wodurch eine Lagereinheit 72 ausgebildet wird. Der Tragarm 70 ist insbesondere auf einer Oberseite zumindest einer Gehäusehälfte 60, 60' vorgesehen. Die zwei Gehäusehälften 60, 60' sind beispielsweise mittels kraft-, form- und/oder stoffschlüssiger Verbindung miteinander verbunden. Vorzugsweise sind die zwei Gehäusehälften 60, 60' der Konsole 58 mittels Schrauben miteinander verbunden bzw. verschraubt. In der Konsole 58 sind weiter vier Elastomerlager bzw. Gummischnüre 64 vorgesehen. Die vier Elastomerlager 64 erzeugen eine Vorspannkraft, welche Vorspannkraft auf die Schwinge 56 und insbesondere auf die Messerwalzen 46, 46' übertragen wird, d.h. die Schwinge 56 ist mittels elastisch verformbaren und eine Vorspannkraft erzeugenden Lagerelemente 63 an die Konsole 58 gelagert. Auch können die Elastomerlager bzw. Gummischnüre 64 eine Überlast aufnehmen, wenn die Messerwalzen 46, 46' beispielsweise auf ein Hindernis und/oder auf Bodenwellen treffen, wodurch Beschädigungen und/oder Brüche oder dergleichen an den Messerwalzen 46, 46' vermieden werden können. Die dabei entstehenden Kräfte können zumindest weitgehend von den Elastomerlager bzw. Gummischnüre 64 aufgenommen werden, so dass die Schwinge 56 mit den daran in Fahrtrichtung F angeordneten Messerwalen 46, 46' nach oben ausweichen können.

Die Konsole 58 ist mittels eines Linearelements 66 höhenverstellbar an der Rahmenkonstruktion 12 gelagert, wobei das Linearelement 66 einen elektrischen, pneumatischen oder hydraulischen Zylinder 67 umfasst. Mittels des Linearelements 66 ist es zudem möglich, die Vorspannkraft bzw. Anpresskraft auf die Messerwalzen 46, 46' variabel zu verstellen und/oder einzustellen. Damit können die Messerwalzen 46, 46' auf die jeweiligen vorherrschenden Umgebungs- und Bodenbedingungen individuell eingestellt werden, um eine optimierte Bodenbearbeitung zu erreichen. Auch kann die Vorspannkraft bzw. Anpresskraft in Abhängigkeit von der Breite der Messerwalzen 46, 46' angepasst und/oder variabel verändert werden.

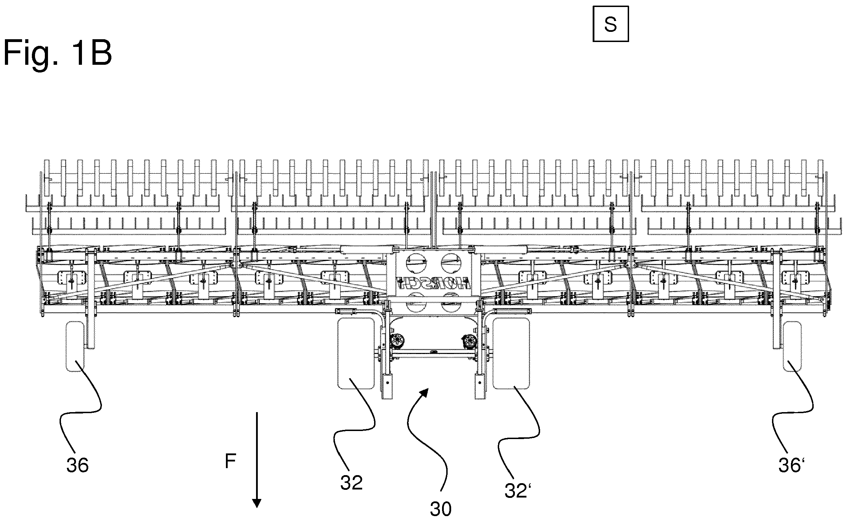

In den Figuren 3A bis 3C ist jeweils eine Schwinge 56 mit zwei daran in Fahrtrichtung F hintereinander angeordneten Messerwalzen 46, 46' abgebildet. Grundsätzlich ist es jedoch denkbar, dass die landwirtschaftliche Bodenbearbeitungsmaschine 10 (vgl. Figuren 1 und 2) sich aus einer Mehrzahl von jeweils einen Meter breiten Messerwalzsegmenten zusammensetzt, welchen Segmenten jeweils ein Linearelement 66 zugeordnet ist; d.h. die Anpresskraft auf die Messerwalzen 46, 46' kann in Abhängigkeit der Breite der Messerwalzen 46, 46' variabel eingestellt werden.

Zusätzlich oder wahlweise ist dem Linearelement 66 bzw. dessen Steuerung eine hier nicht dargestellte Überlastsicherung zugeordnet, welches beispielsweise in Form eines hydraulischen Federspeichers ausgebildet sein kann.

Die zumindest zwei in Fahrtrichtung F hintereinander angeordneten Messerwalzen 46, 46' umfassen jeweils quer zur Fahrtrichtung F orientierte Messer 68. Die Messerwalzen 46, 46' können unterschiedlich ausgebildet sein, so dass beispielsweise die Messerwalzen 46, 46' quer zur Fahrtrichtung F orientierte Messer 68 aufweisen, welche Messer 68 geradlinig und/oder spiralförmig verlaufen. Wahlweise können die Messerwalzen 46, 46' einen geschlossenen Grundkörper aufweisen.

Die Linearelemente 66, insbesondere die Zylinder 67, sind mit einer Steuereinrichtung S verbunden, über welche die Linearelemente 66, insbesondere die Zylinder 67 angesteuert werden (vgl. Fig. 1C). Wahlweise kann auch ein manuelles Verstellen möglich sein.

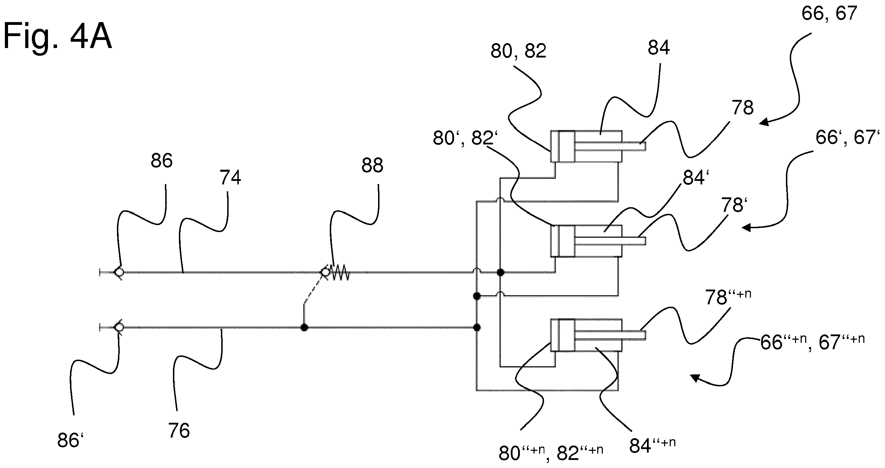

Die Fig. 4A zeigt eine erste Ausführungsvariante eines Hydraulikschaltplans zur Ansteuerung der Linearelemente 66, 66', 66"⁺ⁿ, über welche Linearelemente 66, 66', 66"⁺ⁿ jeweils die Höhe der Konsole 58 und damit die Höhe der Schwinge 56 mit den daran angeordneten Messerwalzen 46, 46' eingestellt werden kann. Wie es Fig. 4A erkennen lässt, sind drei doppeltwirkende Zylinder 67, 67', 67"⁺ⁿ vorgesehen, welche mit beiden Druckseiten jeweils parallel zueinander geschaltet sind. Jeder der drei Zylinder 67, 67', 67"⁺ⁿ weist eine Kolbenseite 80, 80', 80"⁺ⁿ mit einem Kolbenraum 82, 82', 82"⁺ⁿ, eine Kolbenstange 78, 78', 78"⁺ⁿ sowie eine Ringseite 84, 84', 84"⁺ⁿ auf. Die Kolbenseiten 80, 80', 80"⁺ⁿ mit dem Kolbenraum 82, 82', 82"⁺ⁿ der Zylinder 67, 67', 67"⁺ⁿ sind jeweils über eine erste Druckleitung 74 miteinander verbunden bzw. fluidisch gekoppelt und die Ringseiten 82, 82', 82"⁺ⁿ der Zylinder 67, 67', 67"⁺ⁿ sind jeweils über eine zweite Druckleitung 76 miteinander verbunden bzw. fluidisch gekoppelt. Ein Beaufschlagen der Zylinder 67, 67', 67"⁺ⁿ, insbesondere der Kolbenseiten 80, 80', 80"⁺ⁿ mit dem Kolbenraum 82, 82', 82"⁺ⁿ über die erste Druckleitung 74 mit hydraulischem Druck bewirkt ein Ausfahren der Kolbenstangen 78, 78', 78"⁺ⁿ, so dass ein tieferes und damit ein aggressiveres Arbeiten der Messerwalzen 46, 46' im Boden veranlasst wird. Die Ringseiten 84, 84', 84"⁺ⁿ werden hingegen jeweils entlastet oder zumindest mit etwas geringerer Last beaufschlagt.

Ein flacheres Arbeiten der Messerwalzen 46, 46' im Boden wird dadurch erzeugt, indem die Kolbenseiten 80, 80', 80"⁺ⁿ mit dem Kolbenraum 82, 82', 82"⁺ⁿ über die erste Druckleitung 76 entlastet oder mit zumindest etwas geringerer Last beaufschlagt und die Ringleitungen 84, 84', 84"⁺ⁿ über die zweite Druckleitung 76 mit mehr Druck und/oder Last beaufschlagt wird, als die erste Druckleitung 74. Dadurch sind die Kolbenstangen 78, 78', 78"⁺ⁿ der Zylinder 67, 67', 67"⁺ⁿ jeweils zumindest abschnittsweise eingefahren, wodurch ein flacheres Arbeiten der Messerwalzen 46, 46' im Boden erzeugt wird.

Über das jeweils in den Zylindern 67, 67', 67"⁺ⁿ eingestellte Druckniveau, welches sich beispielsweise durch Beaufschlagen der Kolbenseiten 80, 80', 80"⁺ⁿ mit dem Kolbenraum 82, 82', 82"⁺ⁿ über die erste Druckleitung 74 mit Druck einstellt, und durch die in der Konsole 58 vorgesehenen Elastomerlager bzw. Gummischnüre 64 wird eine Vorspannkraft und damit eine Anpresskraft auf die Messerwalzen 46, 46' erzeugt. Die Vorspannkraft und die Anpresskraft kann in Abhängigkeit des eingestellten Druckniveaus in den Zylindern 67, 67', 67"⁺ⁿ, insbesondere im Kolbenraum 82, 82', 82"⁺ⁿ variiert werden. Die Ansteuerung der Zylinder 67, 67', 67"⁺ⁿ erfolgt über eine Steuereinrichtung S, welches als doppeltwirkendes Steuergerät ausgebildet ist. Überlasten, welche beispielsweise beim Auftreffen der Messerwalzen 46, 46' auf ein Hindernis entstehen, werden gemäß vorliegendem Hydraulikplan hauptsächlich über die Elastomerlager bzw. Gummischnüre 64 aufgenommen.

Die erste Druckleitung 74 und die zweite Druckleitung 76 weisen jeweils ein Rückschlagventil 86, 86' auf. Zusätzlich ist in der ersten Druckleitung 74 ein federbelastetes Rückschlagventil 88 vorgesehen, welches mit dem Rückschlagventil 86 in Reihe geschaltet ist. Weiter steht das federbelastete Rückschlagventil 88 mit der zweiten Druckleitung 76 in Verbindung. Die Rückschlagventile 86, 86' und das federbelastete Rückschlagventil 88 bewirken, dass bei Beaufschlagen der Kolbenseite 80, 80', 80"⁺ⁿ mit dem Kolbenraum 82, 82', 82"⁺ⁿ über die erste Druckleitung 74 mit Druck die zweite Druckleitung 76 abgesperrt wird sowie dass bei Beaufschlagen der Ringseite 84, 84', 84"⁺ⁿ mit Druck über die zweite Druckleitung 76 die erste Druckleitung 74 abgesperrt wird.

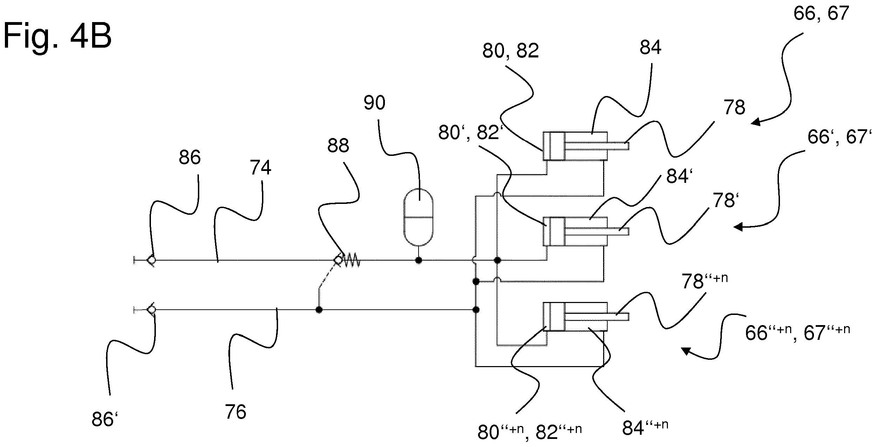

Die in Fig. 4B gezeigte zweite Variante eines Hydraulikschaltplans umfasst sämtliche Komponenten bzw. den gleichen Aufbau gemäß dem in Fig. 4A gezeigten Hydraulikschaltplan zur Ansteuerung der Linearelemente 66, 66', 66"⁺ⁿ. Zusätzlich umfasst die erste Druckleitung 74 einen Druckspeicher 90, welcher zwischen dem federbelasteten Rückschlagventil 88 und der Kolbenseite 80, 80', 80"⁺ⁿ mit dem Kolbenraum 82, 82', 82"⁺ⁿ angeordnet ist und welcher mit dem federbelasteten Rückschlagventil 88 in Reihe geschaltet ist. Der Druckspeicher 90 bewirkt eine bessere Bodenanpassung der Schwinge 56 mit den daran angeordneten zumindest zwei in Fahrtrichtung F hintereinander angeordneten Messerwalzen 46, 46', wodurch jeweils ein Volumenausgleich bei Stellbewegungen der Zylinder 67, 67', 67"⁺ⁿ erfolgt, was vorallem bei Bodenwellen oder dergleichen Bodenunebenheiten vorteilhaft ist. Somit können beispielsweise Kräfte, welche beim Auftreffen der Messerwalzen 46, 46' auf ein Hindernis und/oder auf Bodenwellen entstehen, besser ausgeglichen werden, indem es zu einer schnellen Entlastung der Kolbenseiten 80, 80', 80"⁺ⁿ mit dem Kolbenraum 82, 82', 82"⁺ⁿ kommt.

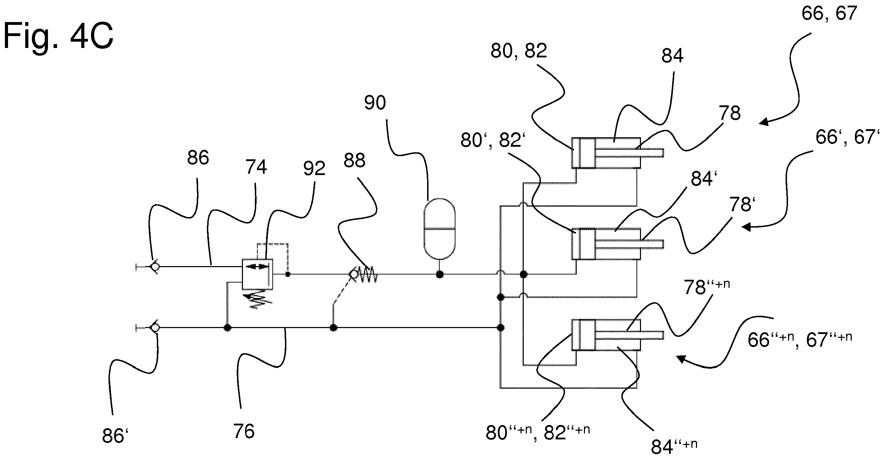

Der in Fig. 4C gezeigte Hydraulikschaltplan (dritte Variante) umfasst sämtliche Komponenten bzw. den gleichen Aufbau gemäß dem in Fig. 4B gezeigten Hydraulikschaltplan zur Ansteuerung der Linearelemente 66, 66', 66"⁺ⁿ. Zusätzlich ist beim Hydraulikschaltplan gemäß Fig. 4C ein Druckventil 92 vorgesehen, welches mit der ersten Druckleitung 74 und mit der zweiten Druckleitung 76 verbunden bzw. fluidisch gekoppelt ist. Mittels des Druckventils 92 werden die hydraulische Vorspannung bzw. die Vorspannungskraft und/oder die Anpresskraft der Konsole 58 und damit der Schwinge 56 mit den daran angeordneten Messerwalzen 46, 46' angepasst und/oder eingestellt. Das Druckventil 92 dient dazu, dass ein voreingestellter bzw. definierter Druck in der ersten Druckleitung 74 und in der zweiten Druckleitung 76 nicht überschritten wird. Das Druckventil 92 kann fest eingestellt oder verstellbar ausgebildet sein, wobei die Verstellung manuell oder elektro-proportional ausgebildet sein kann.

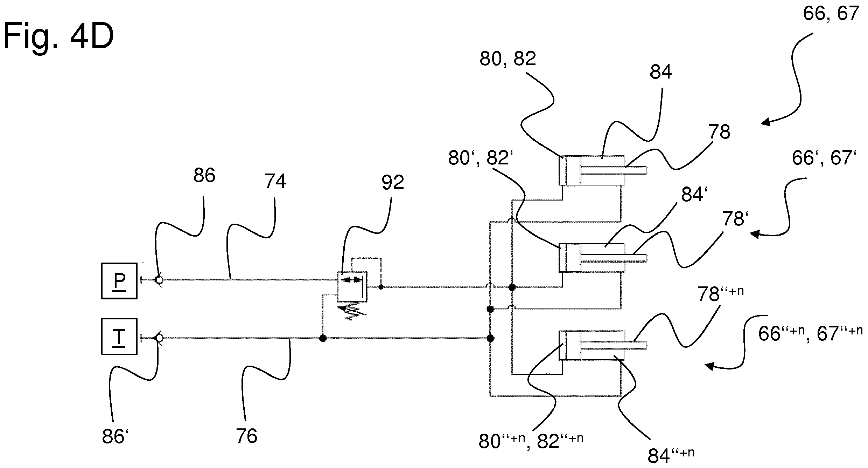

Durch Fig. 4D ist eine vierte Variante eines Hydraulikschaltplans zur Ansteuerung der Linearelemente 66, 66', 66"⁺ⁿ, insbesondere der Zylinder 67, 67', 67"⁺ⁿ abgebildet, wobei über die Linearelemente 66, 66', 66"⁺ⁿ jeweils die Höhe der Konsole 58 und damit die Höhe der Schwinge 56 mit den daran angeordneten Messerwalzen 46, 46' eingestellt wird.

Gemäß Fig. 4D sind drei Linearelemente 66, 66', 66"⁺ⁿ, insbesondere drei Zylinder 67, 67', 67"⁺ⁿ vorgesehen, welche parallel zueinander geschaltet sind. Jeder der drei Zylinder 67, 67', 67"⁺ⁿ weist eine Kolbenseite 80, 80', 80"⁺ⁿ mit einem Kolbenraum 82, 82', 82", eine Kolbenstange 78, 78', 78"⁺ⁿ sowie eine Ringseite 84, 84', 84"⁺ⁿ auf. Die Kolbenseiten 80, 80', 80"⁺ⁿ mit dem Kolbenraum 82, 82', 82"⁺ⁿ der Zylinder 67, 67', 67"⁺ⁿ sind jeweils über eine erste Druckleitung 74 miteinander verbunden bzw. fluidisch gekoppelt und die Ringseiten 82, 82', 82"⁺ⁿ der Zylinder 67, 67', 67"⁺ⁿ sind jeweils über eine zweite Druckleitung 76 miteinander verbunden bzw. fluidisch gekoppelt. Die erste Druckleitung 74 ist mit einer Druckquelle P und die zweite Druckleitung 76 ist mit einem Rücklauf T verbunden, d.h. die Kolbenseite 80, 80', 80"⁺ⁿ mit dem Kolbenraum 82, 82', 82"⁺ⁿ wird über die Druckquelle P mit einem definierten Druck beaufschlagt. Der Rücklauf T dient dazu, dass das Fluid über die zweite Druckleitung 76 in einen hier nicht dargestellten Tank zurückläuft. Die erste Druckleitung 74 und die zweite Druckleitung 76 sind mit einem Druckventil 92 miteinander verbunden, wodurch jeweils das Druckniveau in den Zylindern 67, 67', 67"⁺ⁿ eingestellt wird. Zusätzlich sorgt das Druckventil 92 dazu, dass ein voreigestellter Druck nicht überschritten wird. Durch das Einstellen des Druckniveaus in den Zylindern 67, 67', 67"⁺ⁿ wird auch die Aggressivität der Messerwalzen 46, 46' eingestellt, wobei eine weit ausgefahrene Kolbenstange 78, 78', 78"⁺ⁿ ein tieferes und damit ein aggressiveres Arbeiten der Messerwalzen 46, 46' im Boden und eine eingefahrene Kolbenstange 78, 78', 78"⁺ⁿ ein flacheres und ein wenig aggressiveres Arbeiten der Messerwalzen 46, 46' im Boden ermöglicht.

Das Druckventil 92 kann fest eingestellt oder verstellbar ausgebildet sein, wobei die Verstellung manuell oder elektro-proportional ausgebildet sein kann.

Die Erfindung wurde unter Bezugnahme auf eine bevorzugte Ausführungsform beschrieben. Es ist jedoch für einen Fachmann vorstellbar, dass Abwandlungen oder Änderungen dieser bevorzugten Ausführungsform gemacht werden können, ohne dabei den Schutzbereich der nachstehenden Ansprüche zu verlassen.

### Bezuaszeichenliste

- 10: Bodenbearbeitungsmaschine
- 12: Rahmenkonstruktion
- 14: Mittelrahmen
- 16: Maschinenabschnitt
- 18: Maschinenabschnitt
- 20: Maschinenabschnitt
- 22: Maschinenabschnitt
- 24: Zugdeichsel
- 26: Stellelement
- 26': Stellelement
- 28: Zylinder
- 28': Zylinder
- 30: Fahrwerk
- 32: Rad
- 32': Rad
- 34: Weiteres Stellelement
- 34': Weiteres Stellelement
- 35: Weiterer Zylinder
- 35': Weiterer Zylinder
- 36: Tiefenführungsrad
- 36': Tiefenführungsrad
- 40: Schneidabschnitt
- 42: Zinkenabschnitt
- 44: Rückverfestigungsabschnitt
- 46: Messerwalze
- 46': Messerwalze
- 48: Träger
- 48': Träger
- 50: Zinken
- 50': Zinken
- 52: Packerwalze
- 54: Packerringe
- 56: Schwinge
- 58: Konsole
- 60: Gehäusehälfte
- 60': Gehäusehälfte
- 62: Längsträger
- 63: Lagerelement
- 64: Elastomerlager, Gummischnur
- 66: Linearelement
- 66': Linearelement
- 66"⁺ⁿ: Linearelement
- 67: Zylinder
- 67': Zylinder
- 67"⁺ⁿ: Zylinder
- 68: Messer
- 70: Tragarm
- 72: Lagereinheit
- 74: Erste Druckleitung
- 76: Zweite Druckleitung
- 78: Kolbenstange
- 78': Kolbenstange
- 78"⁺ⁿ: Kolbenstange
- 80: Kolbenseite
- 80': Kolbenseite
- 80"⁺ⁿ: Kolbenseite
- 82: Kolbenraum
- 82': Kolbenraum
- 82"⁺ⁿ: Kolbenraum
- 84: Ringseite
- 84': Ringseite
- 84"⁺ⁿ: Ringseite
- 86: Rückschlagventil
- 86': Rückschlagventil
- 88: Federbelastetes Rückschlagventil
- 90: Druckspeicher
- 92: Druckventil
- F: Fahrtrichtung
- P: Druckquelle
- S: Steuereinrichtung
- T: Rücklauf

## Patentansprüche

1. Landwirtschaftliche Bodenbearbeitungsmaschine (10), die zumindest umfasst:
- eine Rahmenkonstruktion (12) zum Tragen mehrerer Komponenten, insbesondere zur Bodenbearbeitung,
- einen Schneidabschnitt (40) zur Zerkleinerung von Pflanzenrückständen an der Oberfläche eines zu bearbeitenden und/oder von der Bodenbearbeitungsmaschine (10) zu überfahrenden Bodens, welcher Schneidabschnitt (40) zumindest zwei in Fahrtrichtung (F) der Bodenbearbeitungsmaschine (10) hintereinander angeordnete rotierende Messerwalzen (46, 46') umfasst, wobei die Messerwalzen (46, 46') an einer Schwinge (56) montiert sind und gemeinsam eine Tandemanordnung ausbilden, welche Tandemanordnung schwenkbar an einer an der Rahmenkonstruktion (12) gelagerten Konsole (58) angebracht ist, wobei die Schwinge (56) mittels elastisch verformbarer und eine Vorspannkraft erzeugender Lagerelemente (63) an der Konsole (58) gelagert ist, und wobei die zumindest zwei in Fahrtrichtung (F) hintereinander angeordneten Messerwalzen (46, 46') des Schneidabschnittes (40) quer zur Fahrtrichtung (F) versetzt zueinander angeordnet sind,
- einen dem Schneidabschnitt (40) in Fahrtrichtung (F) der Bodenbearbeitungsmaschine (10) nachgeordneten Zinkenabschnitt (42) zur Verteilung der zerkleinerten Pflanzenrückstände und zur Einebnung der Oberfläche des Bodens, sowie
- einen dem Zinkenabschnitt (42) in Fahrtrichtung (F) nachgeordneten Rückverfestigungsabschnitt (44) zur Rückverfestigung des gelockerten und/oder eingeebneten Bodens,
**dadurch gekennzeichnet, dass**
die Konsole (58) mittels eines Linearelements (66, 66', 66"⁺ⁿ) in Form eines doppelwirkenden Zylinders (67, 67', 67"⁺ⁿ) höhenverstellbar an der Rahmenkonstruktion (12) gelagert ist, welches Linearelement (66, 66', 66"⁺ⁿ) mit einer Steuereinrichtung (S) verbunden ist, über welche das Linearelement (66, 66', 66"⁺ⁿ) angesteuert werden kann,
wobei über ein in dem Zylinder (67, 67', 67"⁺ⁿ) eingestelltes Druckniveau und/oder
durch die in der Konsole (58) vorgesehenen Lagerelemente (63) eine Vorspannkraft sowie eine Anpresskraft auf die Messerwalzen (46, 46') erzeugt wird.

2. Bodenbearbeitungsmaschine nach Anspruch 1, bei welcher die Konsole (58) höhenverstellbar an der Rahmenkonstruktion (12) gelagert ist.

3. Bodenbearbeitungsmaschine nach einem der vorhergehenden Ansprüche, bei welcher an der Schwinge (56) in Fahrtrichtung (F) gesehen vorne und/oder hinten jeweils zumindest zwei Messerwalzen (46, 46') angebracht sind.

4. Bodenbearbeitungsmaschine nach einem der Ansprüche 1 bis 3, bei welcher mittels des Linearelements (66) eine Anpresskraft auf die Messerwalze (46, 46') erzeugbar ist oder erzeugt wird, welche Anpresskraft variabel verstellbar ist.

5. Bodenbearbeitungsmaschine nach einem der Ansprüche 1 bis 4, bei welcher dem Linearelement (66) eine mechanische und/oder hydraulische Überlastsicherung zur Begrenzung der Anpresskraft auf die Messerwalze (46, 46') zugeordnet ist.

6. Bodenbearbeitungsmaschine, nach einem der vorhergehenden Ansprüche, bei welcher die zumindest zwei hintereinander angeordneten Messerwalzen (46, 46') jeweils unterschiedlich ausgeführt bzw. ausgebildet sind.

7. Bodenbearbeitungsmaschine nach einem der vorhergehenden Ansprüche, bei welcher die Messerwalzen (46, 46') quer zur Fahrtrichtung (F) orientierte Messer (68) aufweisen, welche Messer (68) geradlinig und/oder spiralförmig und/oder wendelförmig verlaufen.

8. Bodenbearbeitungsmaschine nach einem der vorhergehenden Ansprüche, welche sich aus mehreren klappbar zueinander angeordneten Maschinenabschnitten (16, 18, 20, 22) zusammensetzt, wobei jedem der Maschinenabschnitte (16, 18, 20, 22) zumindest eine Schwinge (56) mit zumindest zwei hintereinander angeordneten Messerwalzen (46, 46') sowie ein Zinkenabschnitt (42) und ein Rückverfestigungsabschnitt (44) zugeordnet sind.

9. Bodenbearbeitungsmaschine nach Anspruch 8, bei welcher die an zwei zueinander klappbaren Maschinenabschnitten (16, 18, 20, 22) in zumindest zwei Reihen hintereinander angeordneten Messerwalzen (46, 46') jeweils versetzt zueinander angeordnet sind und/oder jeweils in das Bearbeitungsfeld des benachbarten klappbaren Maschinenabschnitts (16, 18, 20, 22) hineinreichen.

10. Bodenbearbeitungsmaschine nach einem der Ansprüche 4 bis 9, bei welcher die Anpresskraft in Abhängigkeit der Breite der Maschinenabschnitte (16, 18, 20, 22) und/oder der Messerwalzen (46, 46') variabel veränderbar ist.

11. Bodenbearbeitungsmaschine nach einem der vorhergehenden Ansprüche, bei welcher die Konsole (58) in ihren Bestandteilen in Fahrtrichtung (F) von vorne oben nach hinten unten orientiert ist.

12. Bodenbearbeitungsmaschine nach einem der vorhergehenden Ansprüche, bei welcher der Zinkenabschnitt (42) zumindest zwei hintereinander angeordnete Träger (48, 48') aufweist, an welchen jeweils Zinken (50, 50') angebracht sind.

13. Bodenbearbeitungsmaschine nach Anspruch 12, bei welcher der Winkel der Zinken (50, 50') in Bezug auf die Bodenoberfläche veränderbar ist.

14. Bodenbearbeitungsmaschine nach Anspruch 12 oder 13, bei welcher die Zinken (50, 50') als Striegelzinken oder Grubberspitzen ausgebildet sind.

15. Bodenbearbeitungsmaschine nach einem der vorhergehenden Ansprüche, bei welcher der Rückverfestigungsabschnitt (44) zumindest eine rotierende Packerwalze (52) umfasst.

16. Bodenbearbeitungsmaschine nach einem der vorhergehenden Ansprüche, bei welcher der Zinkenabschnitt (42) und/oder der Rückverfestigungsabschnitt (44), insbesondere die Zinken (50, 50') und/oder die Packerwalze (52) höhenverstellbar zur Rahmenkonstruktion (12) angebracht sind.

17. Bodenbearbeitungsmaschine nach einem der vorhergehenden Ansprüche, bei welcher dem Schneidabschnitt (40) Tiefenführungsräder (36, 36') vorgeordnet sind und/oder bei welcher zwischen dem Schneidabschnitt (40) und dem Zinkenabschnitt (42) Tiefenführungsräder (36, 36') angeordnet sind und/oder bei welcher in den Schneidabschnitt (40) und/oder den Zinkenabschnitt (42) integriert Tiefenführungsräder (36, 36') angebracht sind.

18. Verfahren zur Bodenbearbeitung zumindest umfassend die Schritte:
- Zerkleinern von Pflanzenrückständen an der Oberfläche des Bodens mittels eines Schneidabschnitts (40), welcher zumindest zwei in Fahrtrichtung (F) hintereinander und quer zur Fahrtrichtung (F) versetzt zueinander angeordnete Messerwalzen (46, 46') umfasst, welche Messerwalzen (46, 46') mittels einer Schwinge (56) schwenkbar an einer Konsole (58) gelagert sind, welche Konsole (58) an eine die Komponenten der Bodenbearbeitungsmaschine (10) tragenden Rahmenkonstruktion (12) angebracht ist, wobei die Schwinge (56) mittels elastisch verformbarer und eine Vorspannkraft erzeugender Lagerelemente (63) an der Konsole (58) gelagert ist,
- Verteilen von Pflanzenrückständen und Einebnung der Oberfläche des Bodens, mittels zumindest eines dem Schneidabschnitt (40) in Fahrtrichtung (F) folgenden Zinkenabschnitts (42), sowie
- Rückverfestigen des gelockerten Bodens mittels eines dem Zinkenabschnitt (42) in Fahrtrichtung (F) nachfolgenden Rückerverfestigungsabschnittes (44),
**dadurch gekennzeichnet, dass** die Konsole (58) mittels eines Linearelements (66, 66', 66"⁺ⁿ) in Form eines doppelwirkenden Zylinders (67, 67', 67"⁺ⁿ) höhenverstellbar an der Rahmenkonstruktion (12) gelagert ist, welches Linearelement (66, 66', 66"⁺ⁿ) mit einer Steuereinrichtung (S) verbunden ist, über welche das Linearelement (66, 66', 66"⁺ⁿ) angesteuert wird,
wobei über ein in dem Zylinder (67, 67', 67"⁺ⁿ) eingestelltes Druckniveau und/oder durch die in der Konsole (58) vorgesehenen Lagerelemente (63) eine Vorspannkraft sowie eine Anpresskraft auf die Messerwalzen (46, 46') erzeugt wird.

19. Verfahren nach Anspruch 18, bei welcher die Konsole (58) mittels zumindest eines Linearelements (66) höhenverstellbar an der Rahmenkonstruktion (12) gelagert ist, wobei mit dem zumindest einen Linearelement (66) eine Anpresskraft auf die Messerwalzen (46, 46') erzeugt wird, welche Anpresskraft variabel verstellbar ist.

## Claims

1. An agricultural soil cultivation machine (10), comprising at least:
- a frame structure (12) to carry a plurality of components, in particular for soil cultivation,
- a cutting section (40) to crush plant residues at the surface of soil to be tilled and/or to be traversed by the soil cultivation machine (10), which cutting section (40) comprises at least two rotating knife rollers (46, 46') arranged one after the other in driving direction (F) of the soil cultivation machine (10), wherein the knife rollers (46, 46') are mounted to a swing arm (56) and together form a tandem arrangement, which tandem arrangement is swivelably mounted to a mounting bracket (58) supported on the frame structure (12), wherein the swing arm (56) is supported on the mounting bracket (58) by elastically deformable bearing elements (63) that generate a preload force, and wherein the at least two knife rollers (46, 46') of the cutting section (40) arranged one after the other in driving direction (F) are arranged offset to each other transverse to the driving direction (F),
- a tine section (42) arranged downstream from the cutting section (40) in driving direction (F) of the soil cultivation machine (10), the tine section (42) being used for the distribution of the crushed plant residues and for the levelling of the soil surface, as well as
- a compacting section (44) arranged downstream in driving direction (F) from the tine section (42), the compacting section (44) being used for the compaction of the loosened and/or levelled soil,
**characterised in that**
the mounting bracket (58) is supported on the frame structure (12) so as to be height adjustable by means of a linear element (66, 66', 66"⁺ⁿ) in the form of a double acting cylinder (67, 67', 67"⁺ⁿ), with the linear element (66, 66', 66"⁺ⁿ) being connected to a control device (S) via which the linear element (66, 66', 66"⁺ⁿ) can be controlled, wherein a preload force as well as a contact pressing force is generated on the knife rollers (46, 46') via a pressure level set in the cylinder (67, 67', 67"⁺ⁿ) and/or by the bearing elements (63) provided in the mounting bracket (58).

2. The soil cultivation machine according to claim 1, in which the mounting bracket (58) is mounted on the frame structure (12) so as to be height adjustable.

3. The soil cultivation machine according to one of the previous claims, in which at least two knife rollers (46, 46') are mounted in each case at the front and/or back of the swing arm (56) as seen in driving direction (F).

4. The soil cultivation machine according to one of the claims 1 to 3, in which a contact pressing force is generatable or is generated on the knife roller (46, 46') by the linear element (66), with the contact pressing force being variably adjustable.

5. The soil cultivation machine according to one of the claims 1 to 4, in which the linear element (66) has a mechanical and/or hydraulic overload protection for the limitation of the contact pressing force on the knife roller (46, 46') assigned to it.

6. The soil cultivation machine according to one of the previous claims, in which the at least two knife rollers (46, 46') arranged one after the other are in each case configured or designed differently from each other.

7. The soil cultivation machine according to one of the previous claims, in which the knife rollers (46, 46') have knives (68) oriented transverse to the driving direction (F), with the knives (68) extending in a straight line and/or in a spiral manner and/or in a helical manner.

8. The soil cultivation machine according to one of the previous claims, which is made up of a plurality of machine sections (16, 18, 20, 22) arranged to be foldable relative to one another, wherein each of the machine sections (16, 18, 20, 22) has at least one swing arm (56) with at least two knife rollers (46, 46') arranged one after the other as well as a tine section (42) and a compacting section (44) assigned to it.

9. The soil cultivation machine according to claim 8, in which the knife rollers (46, 46'), which are arranged one after the other in at least two rows at two machine sections (16, 18, 20, 22) that are foldable relative to one another, are in each case arranged offset to each other and/or in each case extend into the working range of the adjacent foldable machine section (16, 18, 20, 22).

10. The soil cultivation machine according to one of the claims 4 to 9, in which the contact pressing force is variably changeable depending on the width of the machine sections (16, 18, 20, 22) and/or of the knife rollers (46, 46').

11. The soil cultivation machine according to one of the previous claims, in which the component parts of the mounting bracket (58) are oriented from the front top to the back bottom in driving direction (F).

12. The soil cultivation machine according to one of the previous claims, in which the tine section (42) has at least two carriers (48, 48') arranged one after the other, to each of which carriers (48, 48') tines (50, 50') are mounted.

13. The soil cultivation machine according to claim 12, in which the angle of the tines (50, 50') is changeable in relation to the ground surface.

14. The soil cultivation machine according to claim 12 or 13, in which the tines (50, 50') are designed as cultivator tips or as harrow tines.

15. The soil cultivation machine according to one of the previous claims, in which the compacting section (44) comprises at least one rotating packer roller (52).

16. The soil cultivation machine according to one of the previous claims, in which the tine section (42) and/or the compacting section (44), in particular the tines (50, 50') and/or the packer roller (52), are mounted so as to be height-adjustable in relation to the frame structure (12).

17. The soil cultivation machine according to one of the previous claims, in which depth control wheels (36, 36') are arranged upstream from the cutting section (40), and/or in which depth control wheels (36, 36') are arranged between the cutting section (40) and the tine section (42), and/or in which depth control wheels (36, 36') are arranged so as to be integrated into the cutting section (40) and/or into the tine section (42).

18. A method for soil cultivation, comprising at least the steps:
- crushing of plant residues at the surface of the soil by a cutting section (40) comprising at least two knife rollers (46, 46') arranged one after the other in driving direction (F) and offset to each other transverse to the driving direction (F), which knife rollers (46, 46') are swivelably mounted to a mounting bracket (58) by means of a swing arm (56), with the mounting bracket (58) being mounted to a frame structure (12) carrying the components of the soil cultivation machine (10), wherein the swing arm (56) is supported on the mounting bracket (58) by means of elastically deformable bearing elements (63) that generate a preload force,
- distributing of plant residues and levelling of the soil surface by means of at least one tine section (42) following the cutting section (40) in driving direction (F), as well as
- compacting of the loosened soil by means of a compacting section (44) subsequent in driving direction (F) to the tine section (42),
**characterised in that** the mounting bracket (58) is supported on the frame structure (12) so as to be height adjustable by means of a linear element (66, 66', 66"⁺ⁿ) in the form of a double acting cylinder (67, 67', 67"⁺ⁿ), with the linear element (66, 66', 66"⁺ⁿ) being connected to a control device (S) via which the linear element (66, 66', 66"⁺ⁿ) is controlled,
wherein a preload force as well as a contact pressing force is generated on the knife rollers (46, 46') via a pressure level set in the cylinder (67, 67', 67"⁺ⁿ) and/or by the bearing elements (63) provided in the mounting bracket (58).

19. The method according to claim 18, in which the mounting bracket (58) is mounted on the frame structure (12) so as to be height adjustable by means of at least one linear element (66), wherein a contact pressing force is generated on the knife rollers (46, 46') with the at least one linear element (66), with the contact pressing force being variably adjustable.

## Revendications

1. Machine agricole de travail du sol (10) qui comprend au moins :
- une construction châssis (12) destinée à porter plusieurs composantes, destinée notamment au travail du sol,
- une section de coupe (40) destinée au broyage des résidus végétaux à la surface d'un sol à travailler et/ou sur lequel ladite machine de travail du sol (10) doit passer, ladite section de coupe (40) comprend au moins deux cylindres de coupe (46, 46') rotatifs agencés l'un derrière l'autre dans le sens de la marche (F) de ladite machine de travail du sol (10), lesdits cylindres de coupe (46, 46') étant montés sur un oscillateur (56) et constituant ensemble un groupe tandem qui est fixé pivotant sur une console (58) disposée sur la construction châssis (12), ledit oscillateur (56) étant disposé sur la console (58) au moyen d'éléments de palier (63) déformables de manière élastique et générant une force de précontrainte, et lesdits au moins deux cylindres de coupe (46, 46') de la section de coupe (40) agencés l'un derrière l'autre dans le sens de la marche (F) étant agencés décalés l'un par rapport à l'autre à la diagonale du sens de marche (F),
- une section à dents (42) en aval de la section de coupe (40) dans le sens de la marche (F) de la machine de travail du sol (10), destinée à la répartition des résidus végétaux broyés et à l'aplanissement de la surface du sol, ainsi que
- une section de rappuyage (44) en aval de la section à dents (42) dans le sens de la marche (F), destinée au rappuyage du sol ameubli et/ou aplani,
**caractérisé en ce que,**
la console (58) est disposée ajustable en hauteur sur la construction châssis (12) au moyen d'un élément linéaire (66, 66', 66"⁺ⁿ) sous forme d'un cylindre à double effet (67, 67', 67"⁺ⁿ), ledit élément linéaire (66, 66', 66"⁺ⁿ) étant relié à un dispositif de commande (S) qui permet de piloter l'élément linéaire (66, 66', 66"⁺ⁿ),
une force de précontrainte ainsi qu'une force de pression étant générées sur les cylindres de coupe (46, 46') par le biais d'un niveau de pression réglé dans le cylindre (67, 67', 67"⁺ⁿ) et/ou par le biais des éléments de palier (63) prévus dans la console (58).

2. Machine de travail du sol selon la revendication 1, dans laquelle la console (58) est disposée sur la construction châssis (12) de manière réglable en hauteur.

3. Machine de travail du sol selon l'une quelconque des revendications précédentes, dans laquelle au moins deux cylindres de coupe (46, 46') respectifs sont fixés à l'oscillateur (56) à l'avant et/ou à l'arrière vu dans le sens de la marche (F).

4. Machine de travail du sol selon l'une quelconque des revendications 1 à 3, dans laquelle une force de pression peut être générée ou est générée sur le cylindre de coupe (46, 46') au moyen de l'élément linéaire (66), ladite force de pression pouvant être ajustée de manière variable.

5. Machine de travail du sol selon l'une quelconque des revendications 1 à 4, dans laquelle un dispositif de sécurité mécanique et/ou hydraulique contre la surcharge est associé à l'élément linéaire (66) pour limiter la force de pression sur le cylindre de coupe (46, 46').

6. Machine de travail du sol selon l'une quelconque des revendications précédentes, dans laquelle lesdits au moins deux cylindres de coupe (46, 46') agencés l'un derrière l'autre sont réalisés ou constitués de manière respectivement distincte.

7. Machine de travail du sol selon l'une quelconque des revendications précédentes, dans laquelle les cylindres de coupe (46, 46') présentent des lames (68) orientées à la diagonale du sens de marche (F), lesdites lames (68) sont rectilignes et/ou sous forme de spirale et/ou de forme incurvée.

8. Machine de travail du sol selon l'une quelconque des revendications précédentes, qui se compose de plusieurs sections de machine (16, 18, 20, 22) agencées rétractables les unes par rapport aux autres, au moins un oscillateur (56) doté d'au moins deux cylindres de coupe (46, 46') agencés l'un derrière l'autre ainsi qu'une section à dents (42) et une section de rappuyage (44) étant associés à chacune des sections de la machine (16, 18, 20, 22).

9. Machine de travail du sol selon la revendication 8, dans laquelle les cylindres de coupe (46, 46'), qui sont agencés sur deux sections de machine (16, 18, 20, 22) rétractables l'une vers l'autre dans au moins deux rangées l'une derrière l'autre, sont agencés respectivement décalés l'un par rapport à l'autre et/ou pénètrent dans le champ de travail de la section de machine rétractable (16, 18, 20, 22) voisine.

10. Machine de travail du sol selon l'une quelconque des revendications 4 à 9, dans laquelle la force de pression peut être modifiée de manière variable en fonction de la largeur des sections de machine (16, 18, 20, 22) et/ou des cylindres de coupe (46, 46').

11. Machine de travail du sol selon l'une quelconque des revendications précédentes, dans laquelle la console (58) est, dans ses composantes, orientée du haut à l'avant vers le bas à l'arrière.

12. Machine de travail du sol selon l'une quelconque des revendications précédentes, dans laquelle la section à dents (42) présente au moins deux supports (48, 48') agencés l'un derrière l'autre, sur chacun desquels des dents (50, 50') sont fixées.

13. Machine de travail du sol selon la revendication 12, dans laquelle l'angle des dents (50, 50') par rapport à la surface du sol peut être modifié.

14. Machine de travail du sol selon la revendication 12 ou 13, dans laquelle les dents (50, 50') sont réalisées en tant que dents de raclage ou pointes de soc.

15. Machine de travail du sol selon l'une quelconque des revendications précédentes, dans laquelle la section de rappuyage (44) comprend au moins un rouleau de compactage (52) rotatif.

16. Machine de travail du sol selon l'une quelconque des revendications précédentes, dans laquelle la section à dents (42) et/ou la section de rappuyage (44), notamment les dents (50, 50') et/ou le rouleau de compactage (52) sont fixés ajustables en hauteur par rapport à la construction châssis (12).

17. Machine de travail du sol selon l'une quelconque des revendications précédentes, dans laquelle des roues de guidage en profondeur (36, 36') sont agencées en amont de la section de coupe (40), et/ou dans laquelle des roues de guidage en profondeur (36, 36') sont agencées entre la section de coupe (40) et la section à dents (42), et/ou dans laquelle des roues de guidage en profondeur (36, 36') sont agencées de manière intégrée dans la section de coupe (40) et/ou dans la section à dents (42).

18. Procédé de travail du sol comprenant au moins les étapes :
- broyage de résidus végétaux à la surface du sol au moyen d'une section de coupe (40), laquelle comprend au moins deux cylindres de coupe (46, 46') agencés l'un derrière l'autre dans le sens de la marche (F) et à la diagonale du sens de la marche (F), décalés l'un par rapport à l'autre, lesdits cylindres de coupe (46, 46') étant disposés pivotants sur une console (58) au moyen d'un oscillateur (56), ladite console (58) étant fixée à une construction châssis (12) portant les composantes de la machine de travail du sol (10), ledit oscillateur (56) étant disposé sur la console (58) au moyen d'éléments de palier (63) déformables de manière élastique et générant une force de précontrainte,
- répartition de résidus végétaux et aplanissement de la surface du sol, au moyen d'au moins une section à dents (42) suivant la section de coupe (40) dans le sens de la marche (F), ainsi que
- rappuyage du sol ameubli au moyen d'une section de rappuyage (44) suivant, dans le sens de la marche (F), la section à dents (42),
**caractérisé en ce que** la console (58) est disposée ajustable en hauteur sur la construction châssis (12) au moyen d'un élément linéaire (66, 66', 66"⁺ⁿ) sous forme d'un cylindre à double effet (67, 67', 67"⁺ⁿ), ledit élément linéaire (66, 66', 66"⁺ⁿ) étant relié à un dispositif de commande (S) qui permet de piloter l'élément linéaire (66, 66', 66"⁺ⁿ),
une force de précontrainte ainsi qu'une force de pression étant générées sur les cylindres de coupe (46, 46') par le biais d'un niveau de pression réglé dans le cylindre (67, 67', 67"⁺ⁿ) et/ou par le biais des éléments de palier (63) prévus dans la console (58).

19. Procédé selon la revendication 18, dans lequel la console (58) est disposée sur la construction châssis (12) de manière ajustable en hauteur au moyen d'au moins un élément linéaire (66), une force de pression étant générée sur les cylindres de coupe (46, 46') à l'aide dudit au moins un élément linéaire (66), ladite force de pression étant ajustable de manière variable.
